Europäisches Patentamt

European Patent Office

Office européen des brevets

(11) Veröffentlichungsnummer: **0 176 031**
A2

(12) # EUROPÄISCHE PATENTANMELDUNG

(21) Anmeldenummer: 85111833.1

(22) Anmeldetag: 19.09.85

(51) Int. Cl.⁴: **B 29 C 67/14**
//B29K105:10

(30) Priorität: 20.09.84 DE 3434522

(43) Veröffentlichungstag der Anmeldung:
02.04.86 Patentblatt 86/14

(84) Benannte Vertragsstaaten:
DE FR GB IT

(71) Anmelder: BASF Aktiengesellschaft
Carl-Bosch-Strasse 38
D-6700 Ludwigshafen(DE)

(72) Erfinder: Gehrig, Heinz, Dr.
Spinozastrasse 30
D-6750 Kaiserslautern(DE)

(54) **Verfahren zur Herstellung von Formteilen aus faserverstärkten Reaktionsharzen.**

(57) Die Erfindung betrifft ein Verfahren zur Herstellung von Formteilen, vor zugsweise Blattfedern aus faserverstärkten Reaktionsharzen mit einem Fasermasseanteil von 50 bis 80% durch Einlegen von vorgerichteten Faserverstärkungsmaterialien in eine Form, dichtes Verschließen der Form, Einfüllen des Reaktionsharzes in die Form, Verringerung des Volumens des Forminnenraumes zum Verdrängen der Restluft, Aushärten des Harzes und Entformen des ausgehärteten Formteils.

EP 0 176 031 A2

BASF Aktiengesellschaft                                O.Z. 0050/37356

Verfahren zur Herstellung von Formteilen aus faserverstärkten Reaktionsharzen

Die Erfindung betrifft ein Verfahren zur Herstellung von Formteilen, insbesondere Blattfedern aus faserverstärkten Reaktionsharzen nach dem Prinzip der Harzinjektion.

Blattfedern aus faserverstärkten Reaktionsharzen wurden bisher nach dem
Wickelverfahren, durch Pultrusion oder Pulforming hergestellt. Diese Verfahren erlauben nur bei Federn einfacher Gestalt, z.B. bei gleichbleibender Blattdicke, eine schnelle Fertigung. Kompliziertere Formen sind nur
mit unvertretbar hohem Zeitaufwand herstellbar.

Das Harzinjektionsverfahren zur Herstellung von Kunststoff-Formteilen
durch Einfüllen von Reaktionsharzen in Formen und Aushärten des Harzes in
der Form ist bekannt. Faserverstärkte Formteile erhält man, wenn man in
die Formen vor dem Einfüllen des Harzes Verstärkungsfasern einlegt. Mit
dem konventionellen Harzinjektionsverfahren kommt man dabei aber nur auf
Fasermasseanteile von etwa 25 bis 35 %. Für hochbelastbare Blattfedern
sind aber Fasermasseanteile von mehr als 50 %, vorzugsweise von 60 bis
70 %, erforderlich.

Der Erfindung lag also die Aufgabe zugrunde, ein Verfahren zur Herstellung von Blattfedern aus Reaktionsharzen mit hohem Anteil an Verstärkungsfasern zu entwickeln, bei dem in schnellen Taktzeiten Formteile, die
auch eine ungleichmäßige Gestalt, z.B. Dicken- und/oder Querschnittsprofil, aufweisen können, mit guten mechanischen Eigenschaften erhalten
werden.

Diese Aufgabe wird durch das erfindungsgemäße Verfahren gelöst, bei welchem die Einstellung eines Fasermasseanteils von 50 bis 80 % dadurch möglich wird, daß man nach dem Einfüllen des Reaktionsharzes in die Form
deren Innenvolumen auf 80 bis 30 % des Innendurchmessers, welches die
Form nach dem Verschließen hatte, verringert.

Als Reaktionsharze kommen außer den üblicherweise zur Herstellung von Faserverbundwerkstoffen verwendeten Epoxidharzen auch ungesättigte Polyesterharze und insbesondere Vinylesterharze in Frage. Diese Harze kommen
als Lösungen in copolymerisierbaren Monomeren (UP- und VE-Harze) bzw. in
niedrigsiedenden organischen Lösungsmitteln (EP-Harze) zum Einsatz, und
sollen dabei eine Viskosität zwischen 100 und 2000 m.Pas aufweisen.

Dd/P

Die Verstärkungsfasern können aus Glas, Kohlenstoff oder aromatischen Polyamiden bestehen. Sie liegen als Gewebe, Gelege oder als Matten vor und werden vor dem Einlegen in die Form mit der gewünschten Geometrie - entsprechend den Belastungen der Feder - vorgerichtet. Dabei werden vorzugsweise Bänder aus mehreren Lagen unindirektional ausgerichteter Fasergewebe für die äußeren Bereiche der Feder eingesetzt und "Kerne" in der vorgegebenen Profilierung für den zentralen Bereich der Feder.

Die Formen sind aus Kunststoff, Holz oder Metall gefertigt. Sie bestehen aus einer - ggf. geteilten - Unterform und einer Oberform (Deckel), die verriegelbar sind und mit Hilfe eines speziellen Dichtsystems gegeneinander verschiebbar sind. Sie weisen an geeigneten Stellen Füll- und Entlüftungsöffnungen auf. An der Forminnenwand können sie mit geeigneten Trennmitteln versehen sein. Um eine wirtschaftliche Arbeitsweise zu realisieren, können mehrere Formen auf einer Transportvorrichtung (Karussell oder Band) angeordnet und nacheinander gefüllt werden.

Bei dem erfindungsgemäßen Verfahren wird zunächst das vorgerichtete faserige Verstärkungsmaterial in die Unterform eingelegt. Dann wird die Form mit dem Deckel dicht verschlossen, diese jedoch noch nicht in die Endposition gebracht. Die Form wird dann gegebenenfalls evakuiert und das Reaktionsharz wird durch die Füllöffnung injiziert. Dabei wird gerade so viel Harz eindosiert, daß die Summe von Harzvolumen und Faservolumen das Volumen des Forminnenraums nach dessen Volumenverringerung geringfügig (vorzugsweise 0,2 bis 2 %) übersteigt. Harz- und Fasermenge werden so eingestellt, daß der Fasermasseanteil zwischen 50 und 80 %, vorzugsweise zwischen 60 und 75 % liegt. Nach dem Einfüllen des Harzes in die Form wird dessen Innenvolumen auf 80 bis 30 %, vorzugsweise auf 60 bis 40 % des Innenvolumens, welches die Form nach dem Verschließen hatte, verringert. Dies geschieht vorzugsweise dadurch, daß die Formhälften gegeneinander zusammengeschoben werden, wobei durch geeignete Dicht-Systeme, z.B. Gummiringe, verhindert wird, daß Harz austritt. Durch die Volumenverringerung wird in der Form befindliche, vor allem an den Fasern anhaftende Restluft aus dem Forminnenraum verdrängt, schließlich wird auch der geringe Harzüberschuß durch die Entlüftungsöffnungen herausgedrückt. Dadurch wird eine einwandfreie Füllung der Form signalisiert. Die Entlüftungsöffnungen werden dann verschlossen und die Form wird - falls erforderlich - verriegelt. Anschließend wird das Harz ausgehärtet, was im allgemeinen durch Kalthärtung bei Raumtemperatur geschieht.

Nach dem Härtungsvorgang, der im allgemeinen nach 20 bis 60 min beendet ist, wird die Form abgekühlt und geöffnet und das fertige Formteil kann entnommen werden.

Die erfindungsgemäß hergestellten Formteile eignen sich insbesondere als hochbelastbare Blattfedern für Automobile und andere Fahrzeuge.

Beispiel

Es wurde eine verriegelbare Holzform benutzt, die aus Boden, Mantel und Deckel bestand und Füll- und Entlüftungsöffnungen aufwies. Boden und Deckel waren über ein Dicht-System aus Gummiringen gegeneinander verschiebbar, wodurch eine Volumenverringerung um ca. 50 % ermöglicht wurde. Als Verstärkungsmaterial wurden Glasfasern verwendet, teils in Form von UD-Geweben, teils als Matte. Ein Glasmassen-Anteil von 68 % wurde eingestellt. Nach dem Einlegen des Verstärkungsmaterials in die Form wurde diese verschlossen, ein Vinylesterharz mit einer Viskosität von 700 m.Pas wurde so eingefüllt, daß die Summe aus Harzvolumen und Faservolumen das Volumen des Forminnenraums nach dessen Volumenverringerung um 0,5 % überstieg. Dann wurde das Innenvolumen der Form durch Zusammenschieben von Deckel und Boden verringert, wodurch Restluft durch die Entlüftungsöffnung angeschoben wurde und schließlich der geringe Harzüberschuß austrat. Das Harz wurde bei Raumtemperatur ausgehärtet, der Härtungsvorgang war nach 35 min beendet. Schließlich wurde die Form abgekühlt und das Formteil entnommen.

Die Feder hatte folgende Abmessungen:

Länge :  1.250 mm
Breite:     60 mm
Dicke :     15 bis 30 mm mit parabolischem Profil.

Folgende Federdaten wurden erreicht:

Federrate : 75 bis 150 N.mm$^{-1}$
Biege-E-Modul : über 46 kN.mm$^{-2}$
Biegebruchspannung: 450 bis 550 N.mm$^{-2}$.

Die Masse der Feder betrug 3,6 kg, eine vergleichbare Stahlfeder hat die Masse von 20 bis 22 kg.

## Patentansprüche

1. Verfahren zur Herstellung von Formteilen aus faserverstärkten Reaktionsharzen durch Einlegen von vorgerichteten Faserverstärkungsmaterialien in eine Form, Verschließen der Form, Einfüllen des Reaktionsharzes in die Form, Aushärten des Harzes und Entformen des ausgehärteten Formteils, dadurch gekennzeichnet, daß ein Fasermasseanteil von 50 bis 80 % eingestellt wird, und daß man nach dem Einfüllen des Reaktionsharzes in die Form deren Innenvolumen auf 80 bis 30 % des Innenvolumens, welches die Form nach dem Verschließen hatte, verringert.

2. Verfahren nach Anspruch 1, dadurch gekennzeichnet, daß das Reaktionsharz ein Epoxidharz, ein ungesättigtes Polyesterharz oder vorzugsweise ein Vinylesterharz ist, dessen Viskosität zwischen 100 und 2000 m.Pas liegt.

3. Verfahren nach Anspruch 1, dadurch gekennzeichnet, daß so viel Harz in die Form eingefüllt wird, daß die Summe aus Harzvolumen und Faservolumen das Volumen des Forminnenraums nach dessen Volumenverringerung geringfügig, vorzugsweise um 0,2 bis 2 % übersteigt.